# EUROPEAN PATENT APPLICATION

(11) **EP 4 554 265 A1**
(43) Date of publication of application: **14.05.2025**
(21) Application number: 23208127.3
(22) Date of filing: 07.11.2023
(51) Int. Cl.: H04W 12/06

(54) **TERMINAL DEVICE, SYSTEM AND METHOD USING AUTS FOR DATA TRANSFER**

(71) Applicant: Giesecke+Devrient Mobile Security Germany GmbH, 81677 München (DE)
(72) Inventor: Shingnapurkar, Rushikesh, 411004 Pune (IN); Vinchhi, Tapan, 411004 Pune (IN)
(74) Representative: Ter Meer Steinmeister & Partner

(57) **Abstract**

The invention relates to a terminal device being adapted to transfer data to a backend system over a mobile communication network, the terminal device comprising: a secure element, wherein the secure element comprises an international mobile subscriber identifier which uniquely identifies the secure element at the mobile communication network such that the secure element is internationally fully personalized; a communication interface which is adapted to communicate via the mobile communication network; wherein the terminal device is adapted to: receive data from a sensor unit; receive an authentication request from a core network entity, the authentication request comprising a network challenge - RAND - and a network authentication token - AUTN; retrieve a sequence number - SQN - from the authentication request; verify the SQN; always declare the SQN to be invalid by returning a command response comprising a synchronization failure parameter - AUTS, the AUTS including at least one data field containing the data; and send the command response to the backend system (60) via the communication interface.

## Description

The present invention relates to a device, in particular terminal device, which is adapted to transfer data to a backend system via a mobile communication network based on enforced synchronization failures. The invention also relates to the system comprising the device, a core network entity and the backend system and a method for transferring data in the system using the synchronization failure parameter AUTS.

With the expansion of the Internet of Things, IoT, massive amounts of devices daily connect to existing mobile communication networks. A device, in particular terminal device, also referred to as IoT device subsequently, may be used to send data, which can be captured sensor data of a sensor assigned to the device to an IoT backend system over a mobile (wireless) communication network. The captured sensor data can be for example temperature or humidity reading, motion detection events, GPS coordinates, data indicative of an accident that occurred, or an amount of a consumable, like gas, water or current. Similarly, other data or information present at the IoT device, such as a functionality status of the device, may be sent from the loT device to the IoT backend system.

Often, the captured sensor data for IoT use cases comprise rather small amounts of data, such that terminal devices usually transfer small amounts of data per data transfer instance, however, potentially repeated regularly and often. Over a time period of, e.g. a month or longer, individual terminal devices therefore may transfer substantial amounts of data to a backend system over the mobile communication network.

For a secured communication over the mobile communication network, a mobile communication is required to include a subscriber identity module, SIM, including at least one subscription profile. The subscription profile is a set of subscription data, including at least the International Mobile Subscriber Identity, IMSI, and the network authentication key Ki, and a profile number, ICCID. The profile enables the mobile communication device to authenticate the mobile communication device versus the mobile communication network.

For attaching to a mobile communication network, a challenge-response authentication procedure is performed. Herein, the terminal device sends to an entity of the mobile communication network, over the mobile communication network, a network attach request. The core network entity sends to the terminal device over the mobile communication network an authentication challenge. The terminal device generates an authentication response based on the received challenge and a secret cryptographic key of the SIM. Only after successful execution of the challenge-response authentication, the exchange of data between the terminal device and the backend system begins. The attach procedure is part of the signaling mechanism.

The data of the terminal device, IoT data, is usually transferred using the secure channel protocol 80 or 81, SCP80 or SCP81, which is based on the application layer in the network layer. Hence, each data exchange needs to comprise additional information which is relevant to the respective protocol. This additional information increases the overhead for each secured data transfer over the mobile communication network such that transferring only small amounts of data becomes increasingly inefficient and may excessively load the network capacity.

EP 2 533 485 B1 relates to sending subscription and/ or instruction data comprised in the data field RAND during an authentication procedure in response to requesting access or attachment to the mobile communications systems based on a preliminary IMSI. The transferred data, however, are subscription profile data instead of IoT data.

US 101 911 937 B2 relates to sending an identifier ID in response to an authentication failure message, either in the field RAND or the field AUTN. The transferred data, however, are subscription profile data instead of IoT data.

Hence, there is a need to provide a terminal device, system and corresponding method which enable to transfer data more efficiently, in particular for IoT use case scenarios, via the mobile communication network.

The above-identified objectives are solved with the features of the independent patent claims. Further advantageous embodiments are described in the dependent patent claims.

In an aspect of the present invention there is provided a terminal device being adapted to transfer data to a backend system over a mobile communication network.

The terminal device comprises a secure element, wherein the secure element comprises an international mobile subscriber identity which uniquely identifies a subscriber in the mobile communication network. The subscriber receives the fully personalized secure element for the purpose of uniquely identifying the subscriber. Thus, the international mobile subscriber identifier allows for an internationally unique identification of the subscriber.

The international mobile subscriber identifier is an individually assigned or allocated identifier like a temporary IMSI, a permanent IMSI in the case of GMS, 2G, 3G or 4G mobile communication networks or a subscriber permanent identifier, SUPI, in the case of 5G mobile communication networks or higher mobile communication networks. The international mobile subscriber identifier, when being a SUPI, may comprise the IMSI, e.g., when the SUPI is based on the IMSI. Alternatively, the international mobile subscriber identifier, e.g. the SUPI, may be of type network access identifier, NAI.

However, the international mobile subscriber identifier as comprised in the secure element is not a boot-IMSI or pre-IMSI, e.g., a randomly selected out of a range of BOOT-IMSIs available in the eUICC of the device, which are used only to initially attach the terminal device to the wireless communication network, e.g. used for bootstrap network attachment attempts. Such boot-IMSI - as for instance known from US 10,911,937 B2 - are not the international mobile subscriber identifier according to the invention.

The terminal device further comprises a communication interface which is adapted to communicate via the mobile communication network. The communication interface may be a unit for modulating and demodulating data to fulfill communication technique requirements for communication with the mobile communication network, e.g., a modem within the terminal device.

The terminal device is adapted to receive data from a sensor unit. Furthermore, the terminal device is adapted to -receive an authentication request from a core network entity. The authentication request comprises a network challenge - RAND - and a network authentication token - AUTN. Moreover, the terminal device is adapted to retrieve a sequence number - SQN - from the authentication request and to verify the SQN. Furthermore, the terminal device is adapted to always declare the SQN to be invalid by returning a command response comprising a synchronization failure parameter - AUTS. The AUTS includes at least one data field containing the data. Moreover, the terminal device is adapted to send the command response to the backend system via the communication interface.

The core network is a dedicated part of the mobile communication network hosting a network access security domain, i.e., a set of security features that enable a terminal device to authenticate and access services via the mobile communication network securely, including the 3GPP access and Non-3GPP access, and in particular, to protect against attacks on its (radio) interfaces.

According to the standard 3GPP TS 33.102 V17.0.0 (2022-03), an authentication entity in the mobile communication network, in particular an authentication center - AuC - in the home environment, generates a fresh SQN and an unpredictable challenge RAND, which is a random number. Based thereon, the authentication challenge comprising the two parameter RAND and AUTN may be provided to the terminal device via the mobile communication network. The AUTN may comprise a concatenation of the SQN, an authentication management field - AMF, and a message authentication code - MAC. Preferably, the SQN is concealed using an anonymity key - AK, as the SQN may expose the identity and location of the user.

Upon receiving the authentication challenge, the terminal device is adapted to execute the AUTHENTICATE command, as specified in the standard ETSI TS 131102 V17.10.0 (2023-07). The AUTHENTICATE command comprises two verifications.

In a first verification, the terminal device computes the expected message authentication code - XMAC - by applying a message authentication function for network authentication f1 based on a secret key stored in the terminal device to a concatenation of the SQN, RAND and the AMF. The XMAC is verified against the MAC which is included in the AUTN. In case the XMAC differs from the MAC, the terminal device abandons the AUTHENTICATE function.

In a second, subsequent verification, the terminal device verifies that the received SQN is previously unused. The terminal device may verify, e.g., that the received SQN is higher than the previously highest SQN encountered. Under normal circumstances, the SQN is freshly generated by the authentication entity, wherein the authentication entity keeps track of which SQN has been previously generated. Hence, no previously used SQN should be expected by the terminal device. However, according to the key aspect of the invention, the terminal device is adapted to always declare the SQN to be invalid, especially when the SQN is valid. The consequence of a so-declared invalid SQN is a synchronization failure, wherein the terminal device is adapted to abandon the AUTHENTICATE function and to send a command response comprising the AUTS to an entity of the mobile communication network, in particular a mobile network operator.

In other words, the command response comprising the AUTS is always enforced, irrespective of whether the SQN is valid. The inventors realized that the AUTS according to the standard ETSI TS 131102 V17.10.0 (2023-07) comprises several bytes of data which may be used for seamlessly transferring cognitive data, i.e., without changing the mutual authentication protocol between the terminal device and the mobile communication network.

According to the standard ETSI TS 131102 V17.10.0 (2023-07) the AUTS comprises a concatenation of the highest sequence number the terminal device ever encountered concealed with the AK and a message authentication code of the AUTS - MAC-S. The technical function of the AUTS is to trigger a re-synchronization with the mobile communication network.

In a preferred embodiment, the terminal device is adapted to store at least one sequence number, and to compare a current sequence number with the at least one stored sequence number, and to store at least the sequence number which is higher. Further preferably, the terminal device is adapted to store up to 32 sequence numbers.

The technical effect of the enforced command response comprising the AUTS is to save overhead data when transferring cognitive data, e.g., IoT data. For this effect to become perceivable, the amount of data to be transferred should be relatively small, preferably small enough to be transferred in the AUTS by replacing the highest sequence number SQNMS the terminal device ever encountered with the loT data. One advantage of the terminal device according to the invention therefore is to improve the ratio of usable data versus overall data in a data transfer via the mobile communication network as the communication overhead is reduced to a minimum.

Furthermore, the response command comprising the AUTS is sent based on layer 2 of the Open Systems Interconnection (OSI) model. Hence, the terminal device according to the invention does not need to establish layer 3 of the OSI model for transferring data via the mobile communication network at all. Nevertheless, the terminal device may participate in the standardized mutual authentication protocol as it does not violate related standards, in particular ETSI TS 131102 V17.10.0 (2023-07).

In a preferred embodiment, the size of the data to be transferred is smaller or equal to 48 bits, wherein the data to be transferred is concealed by the AK, in particular by computing a bitwise Xor between the data to be transferred and the AK.

In one embodiment, the terminal device further comprises the sensor unit. In this embodiment, the sensor unit forms part of the terminal device.

In an alternative embodiment, the terminal device is coupled to the sensor unit being external to the terminal device.

In any alternative, the sensor unit may be any type of sensor, e.g., a temperature sensor, humidity sensor, gas detection sensor, dam water level sensor, acceleration sensor, location sensor, gyroscope sensor, acoustic sensor, and so on.

In any of these two embodiments, the terminal device may furthermore comprise a control unit which is adapted to establish a data link between the sensor unit and the secure element such that the sensor unit may provide the data to be transferred to the secure element.

In a preferred embodiment, the terminal device is further adapted to request via the mobile communication interface, a connection to the mobile communication network based on the international mobile subscriber identifier. It may be based on a TMSI that is derived from the IMSI for protecting the IMSI. It may also be based on a subscriber concealed identifier - SUCI - that is derived from the SUPI for protecting the SUPI.

This connection request may be a network attach request. Alternatively, the entity of the mobile communication network, in particular the core network, may request the identity of the terminal device, which the terminal device responds with a message comprising the international mobile subscriber identifier. In either case, the terminal device is adapted to provide the international mobile subscriber identifier to the core network entity.

In a preferred embodiment, the RAND comprises a random number which is received or generated by the core network entity, and the AUTN includes the SQN, preferably concealed, an authentication management field - AMF, and a message authentication code - MAC. The SQN may be concealed by computing a parameter value based on a bitwise Xor between the SQN and an anonymity key - AK.

In an even more preferred embodiment, the terminal device is further adapted to retrieve the SQN by generating the AK based on the RAND and computing a bitwise Xor between the parameter value and the AK. Note that applying the bitwise Xor between the SQN and the AK, and between the result thereof and the AK will result in the SQN.

In a preferred embodiment, the command response comprises a synchronization failure tag, which is stored in a first data field of the command response, preferably the first byte, a length of the AUTS, which is stored in a second data field of the command response, preferably the second byte, and the AUTS, which is stored in a third data field of the command response, preferably the remaining bytes.

The synchronization failure tag may be 'DC' according to the standard ETSI TS 131102 V17.10.0 (2023-07). The length of the AUTS may be 14 bytes, for instance, of which the first 48 bits are reserved for the data to be transferred, ideally concealed with the AK, and the remaining 64 bits are reserved for the MAC-S. Preferably, the length of the AUTS is stored as a hexadecimal number in the second data field of the command response. In other embodiments, the length of the AUTS may be arbitrary.

In a preferred embodiment, the AUTS has a maximum size, preferably 14 bytes, further preferably 48 bits, wherein the terminal device is further adapted to split data to be transferred which exceeds the maximum size into at least two parts, and to transfer each part of the data in sequential command responses. In this embodiment, if the data to be transferred exceeds, e.g., 48 bits, the terminal device is adapted to invoke more than one command response comprising the AUTS by repeatedly sending network attach requests to the core network entity, wherein each AUTS carries a fraction of the data, until the entire data is transferred to the backend system.

In a preferred embodiment, the data to be transferred comprises one type of the group consisting of:
- sensor data, which is captured by a sensor of the sensor unit;
- status data, which represents status information of the sensor unit and/or the terminal device;
- a notification message; and
- combinations thereof.

In a preferred environment, the secure element further comprises an individual key, which is assigned to the terminal device and derived from a master key, wherein the master key is assigned to the mobile communication network. In this embodiment, the terminal device is further adapted to derive a session key based on the individual key and the received RAND. Moreover, the terminal device is adapted to create a ciphertext by encrypting at least the data to be transferred based on the session key. Furthermore, the terminal device is adapted to store the ciphertext in the AUTS. In other words, the ciphertext may replace the highest sequence number the terminal device ever encountered in the AUTS of the always enforced command response.

The technical effect thereof is to send the data to be transferred in encrypted form which improves the security of the terminal device further. The core network entity may provide the master key from which the individual key of the terminal device and possibly individual keys of further terminal and/or sensor devices are derived. The master key has been provided to the core network entity in a production or provisioning phase and securely stored, preferably in a hardware security module HSM connected or connectable to the core network entity.

In a preferred embodiment, the individual key is a symmetric key which is securely stored in a secure storage of the terminal device, in particular its secure communication unit.

In a preferred embodiment, the individual key is derived from the master key and the international mobile subscriber identifier.

In a preferred embodiment, the secure element of the terminal device is any of the group consisting of: a subscriber identity module, SIM, an embedded SIM, an integrated SIM, a software application, and combinations thereof.

The term "secure element" is synonymous with the term "UICC", "eUICC", "iUICC", "Subscriber Identity Module", "Smart Card", "iUICC", "Integrated eUICC", "Integrated Secure Element", "embedded Secure Element", "Secure Element", "SIM", "eSIM" or "iSIM". Secure element also includes USIM, TSIM, ISIM, CSIM or R-UIM.

A secure element, abbreviated SE, in the sense of the invention is an electronic module reduced in size and resource scope, which may have a control unit (microcontroller) and at least one interface (data interface) for communication with instances located outside the secure element, such as terminal devices, servers, etc.. This communication preferably takes place via a connection protocol, in the case of a secure element, in particular a protocol in accordance with the ETSI TS 102 221 or ISO-7816 standard.

The secure element can also be a software component in a trusted part of an operating system, a so-called Trusted Execution Environment, or TEE, of the device. For example, the secure element is formed within a secure runtime environment in the form of programs running therein, so-called "trustlets".

The secure element can also be an integral part of a larger integrated circuit, such as a modem or application processor. Such UICCs are referred to as "integrated UICC", "integrated TRE", "integrated eUICC" or "integrated SE". Such secure elements are permanently integrated into an SoC as an integrated processor block and can be connected via an in-chip bus.

The SE can also be an integral part of a larger integrated circuit, such as a modem or application processor. Such SEs are referred to as "integrated UICC," "integrated TRE," "integrated eUICC," or "integrated SE." Such SEs are permanently integrated into an SoC as an integrated processor block and can be connected via an in-chip bus. The SE has, for example, an internal or external secure non-volatile memory area in which the identity data is securely placed to prevent tampering and/or misuse attempts during identification and/or authentication to the network.

In one embodiment, the SE can be operable by means of a terminal device, whereby the SE in this embodiment is self-sufficient except for supply signals such as supply voltage, clock, reset, etc. Then the SE may have an interface (data interface, communication interface) for communication with the terminal device, into which the SE may be inserted ready for operation. This communication preferably takes place via a connection protocol, in particular a protocol in accordance with the ETSI TS 102 221 or ISO-7816 standard.

In a preferred embodiment, the terminal device further comprises a control unit, wherein the control unit is adapted to access the secure element, execute functions of the terminal device and to provide messages to be sent via the communication interface of the terminal device. Furthermore, the terminal device may comprise a secure communication unit. In some embodiments, the secure communication unit is the control unit.

In another aspect of the invention, it is provided a system for transferring data from a sensor unit to a backend system over a mobile communication network. The system comprises a terminal device, a core network entity, and the backend system. The core network entity is adapted to send the authentication request to the terminal device; receive the command response; extract the data from the AUTS; enrich the data at least based on the international mobile subscriber identifier; and send the enriched data to the backend system. The backend system is adapted to store the received data in a record of a data structure in a memory unit.

The core network entity, e.g., a unified data management (UDM)/authentication credential repository and processing function (ARPF) of a mobile network operator according to the standard ETSI TS 133 501 V17.10.0, may receive an authentication vector comprising the RAND and the AUTN from the authentication center of the home environment of the mobile communication network. Thus, the SQN, which forms part of the AUTN, is freshly generated. Despite the freshly generated SQN, the terminal device according to an aspect of the invention enforces a response command comprising the AUTS, wherein the AUTS is packed with data of a sensor unit to be transferred. Hence, the core network entity, upon receiving the AUTS, may extract the transferred data, e.g., by applying the anonymity key to the first 48 bits of the AUTS. To generate the anonymity key, both the terminal device and the core network entity, respectively, need to execute a cryptographic function, in particular a key generating function to compute AK in re-synchronization procedures with the property that no valuable information can be inferred from the function values about other cryptographic functions supported by the terminal device.

In a preferred embodiment of the system, the core network entity is further adapted to receive a connection request of the terminal device based on the international mobile subscriber identifier and extract and/or decrypt and store the international mobile subscriber identifier in a database.

Storing the international mobile subscriber identifier of the terminal device enables the core network entity to enrich subsequent IoT data transferred to the core network entity using the AUTS without having to transfer any additional device identifier. Note that the terminal device is fully equipped and therefore the international mobile subscriber identifier fully personalizes the terminal device.

In a preferred embodiment, the system comprises a terminal device, wherein the secure element further comprises an individual key, which is assigned to the terminal device and derived from a master key, wherein the master key is assigned to the mobile communication network. In this embodiment, the terminal device is further adapted to derive a session key based on the individual key and the received RAND.

Moreover, the terminal device is adapted to create a ciphertext by encrypting at least the data to be transferred based on the session key. Furthermore, the terminal device is adapted to store the ciphertext in the AUTS. The core network entity is further adapted to extract the ciphertext, derive the individual key based on the international mobile subscriber identifier and the master key from which the individual key is derived, derive the session key from the derived individual key and the RAND, and decrypt the ciphertext based on the derived session key and extract the data.

According to yet another aspect of the invention, a method for securely transferring data from a terminal device to a backend system over a mobile communication network is provided. The terminal device is equipped with an international mobile subscriber identifier, to uniquely identify the terminal device to the mobile communication network. The method comprises the steps:
- providing, by a sensor unit being assigned to the terminal device, data to be transferred to the secure element;
- requesting, by the terminal device via the mobile communication interface, a connection to the mobile communication network based on the international mobile subscriber identifier;
- in response to the connection request, sending, by a core network entity, an authentication request to the terminal device via the mobile communication network, wherein the authentication request comprises a network challenge - RAND - and a network authentication token - AUTN;
- retrieving, by the terminal device, a sequence number - SQN - from the authentication request and verifying the SQN,
- always declaring, by the terminal device, the SQN to be invalid by returning a command response comprising a synchronization failure parameter - AUTS, the AUTS including at least one data field containing the data to be transferred;
- sending, by the terminal device, the command response to the core network entity via the communication interface;
- receiving, by the core network entity, the command response,
- extracting, by the core network entity, the data from the AUTS, enriching the data at least based on the international mobile subscriber identifier and forwarding the enriched data to the backend system; and
- storing, by the backend system, the received data in a memory unit.

In a preferred embodiment, the method further comprises the steps:
- deriving, by the terminal device, a session key based on an individual key of the secure element and the received RAND, wherein the individual key is assigned to the terminal device and derived from a master key, wherein the master key is assigned to the mobile communication network;
- creating, by the terminal device, a ciphertext by encrypting at least the data to be transferred based on the session key;
- storing, by the terminal device, the ciphertext in the AUTS;
- extracting, by the core network entity, the ciphertext,
- deriving, by the core network entity, the individual key based on the international mobile subscriber identifier and the master key from which the individual key is derived,
- deriving, by the core network entity, the session key from the derived individual key and the RAND, and
- decrypting, by the core network entity, the ciphertext based on the derived session key and extracting the data.

In a preferred embodiment, the method further comprises the steps:
- creating, by the terminal device, a hash digest by signing the data to be transferred based on a cryptographic hash function and the session key,
- creating, by the terminal device, the ciphertext by encrypting the signed to be transferred based on the session key;
- verify, by the core network entity, the signature of the decrypted transferred data.

In a preferred embodiment, the method further comprises, updating, by the backend system, upon receiving the enriched data from the core network entity, a record of the data structure assigned to the international mobile subscriber identifier comprised in the enriched data, and sending, by the backend system, a done message to the core network entity upon updating the record of the data structure.

In a preferred embodiment, the method further comprises:
- generating, by the terminal device, the AK by evaluating a cryptographic function on the received RAND;
- computing, by the terminal device, a bitwise Xor between a concealed SQN comprised in the AUTN and the AK to retrieve the SQN;
- generating, by the terminal device, the XMAC and comparing the latter to the MAC comprised in the AUTN;
- generating, by the terminal device, the MAC-S; and
- verifying, by the core network entity, the received MAC-S comprised in the AUTS.

In the following, the invention or further embodiments and advantages of the invention are explained in more detail based on drawings, wherein the drawings describe only embodiments of the invention. Identical components in the drawings are given the same reference signs. Elements drawn with dashed lines are considered as optional elements.

The drawings are not to be regarded as true to scale, and individual elements of the drawings may be shown in exaggeratedly large or exaggeratedly simplified form.
Fig. 1a shows a first exemplary embodiment of a terminal device according to an aspect of the invention.
Fig. 1b shows a second exemplary embodiment of a terminal device according to an aspect of the invention.
Fig. 2 shows an exemplary embodiment of a system according to an aspect of the invention.
Fig. 3 shows an exemplary flow chart of a method according to an aspect of the invention.
Fig. 4 shows an exemplary flow chart of a method according to a further aspect of the invention.
   s
Fig. 5 shows an exemplary embodiment of constructing the parameter AUTS by the terminal device according to an aspect of the invention.

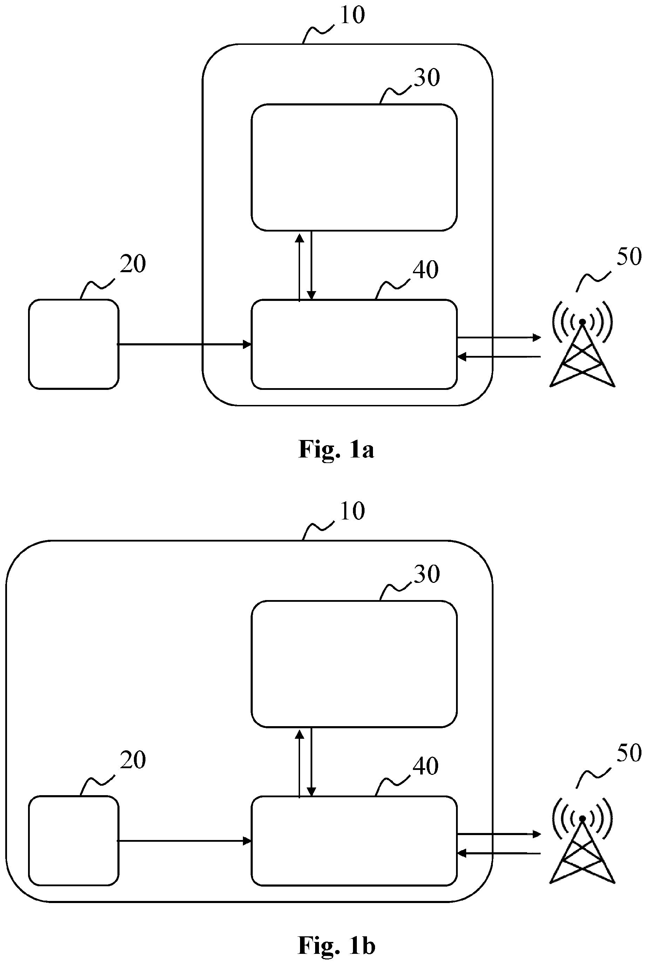

Fig. 1a shows a first exemplary embodiment of a terminal device 10 according to an aspect of the invention.

The first exemplary embodiment of the terminal device 10 comprises a secure element 30 and a mobile communication interface 40, wherein the secure element 30 and the mobile communication interface 40 may exchange data bidirectionally in order to send and/or receive messages. The terminal device, in particular via its mobile communication interface 40, may receive IoT data from an external sensor unit 20. The sensor unit 20 may establish a data communication with the terminal device, such that the sensor unit 20 may provide IoT data to the terminal device.

In some embodiments, the mobile communication interface 40 is a modem.

The mobile communication interface 40 is adapted to establish a mobile communication channel for sending and/or receiving data from an entity 50 of the core network. The core network entity 50 may be, e.g., a unified data management (UDM)/authentication credential repository and processing function (ARPF) of a mobile network operator. The core network entity 50 may further be comprised in the backend system (not shown in Fig. 1a).

Fig. 1b shows a second exemplary embodiment of a terminal device according to an aspect of the invention. All elements shown in Fig. 1b and described with reference to Fig. 1b are identical to corresponding elements of Fig. 1a if same reference signs are used unless it is otherwise stated. For these same elements, a further explanation is omitted.

With respect to Fig. 1a, the terminal device differs in that the sensor unit 20 forms an internal part of the terminal device 10. In this embodiment, the sensor unit 20 may directly provide IoT data to be transferred to the secure element 30, which is adapted to insert the IoT data into the parameter AUTS.

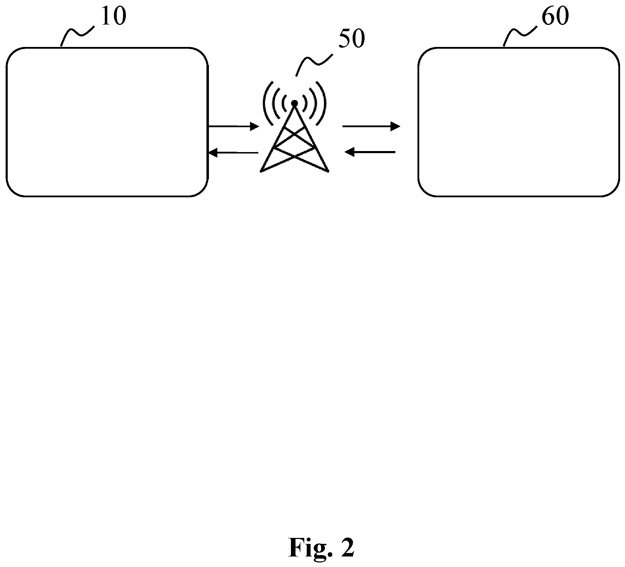

Fig. 2 shows an exemplary embodiment of a system according to an aspect of the invention. All elements shown in Fig. 2 and described with reference to Fig. 2 are identical to corresponding elements of Fig. 1a if same reference signs are used unless it is otherwise stated. For these same elements, a further explanation is omitted.

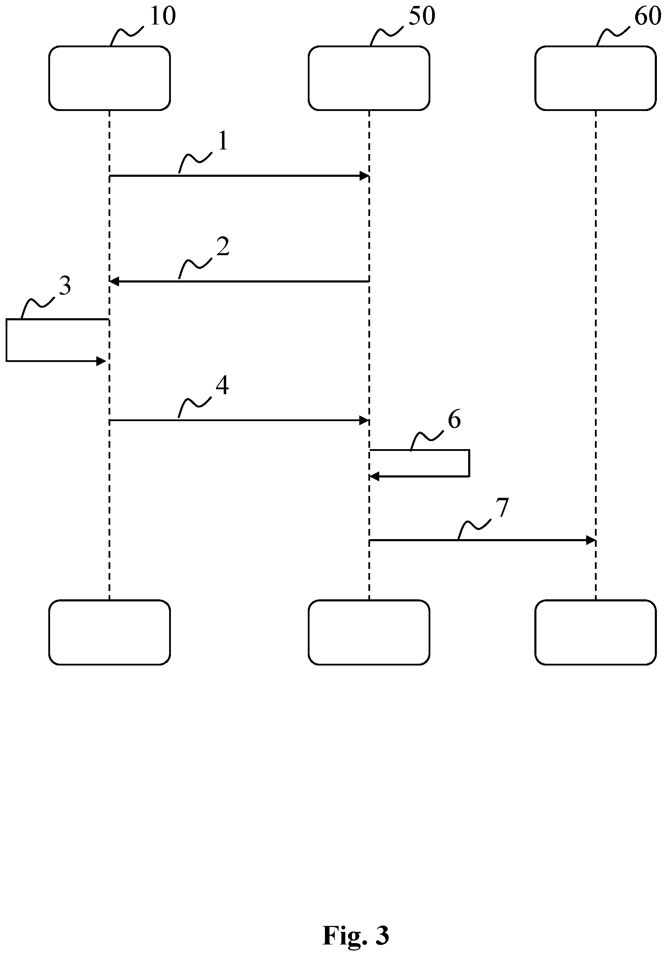

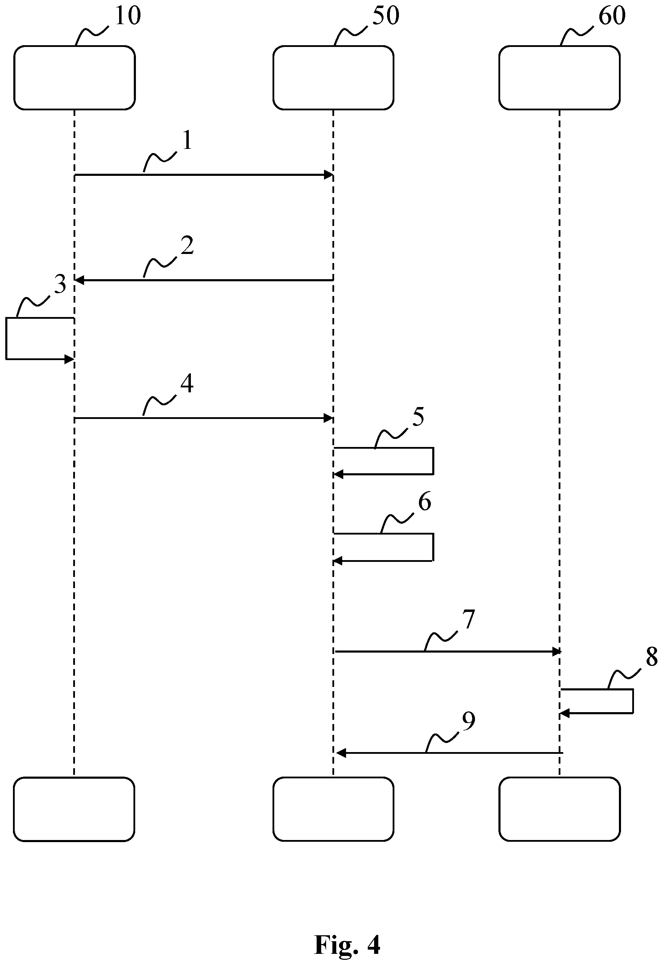

The system comprises a terminal device 10, an entity 50 of the mobile communication network, in particular the core network, and a backend system 60. The method steps which are executed in the system according to an aspect of the invention are described in more detail with respect to Fig. 3 and 4.

The terminal device 10 is adapted to establish a channel to the core network entity 50 for executing a mutual authentication procedure. According to an aspect of the invention, the terminal device 10 is adapted to always generate a synchronization failure parameter AUTS, even though the authentication procedure is based on a valid SQN. The terminal device 10 is further adapted to insert data provided by a sensor unit 20 into the AUTS such that the terminal device is configured to transfer the data by way of the enforced response command comprising the AUTS to the core network entity 50.

Accordingly, the core network entity 50 is adapted to extract the data from the AUTS, enrich the data with the international mobile subscriber identifier ID of the terminal device 10 and forward the enriched data via the mobile communication network to a backend system 60. The international mobile subscriber identifier ID may be provided to the mobile communication network by an initial network attach request of the terminal device 10 and/or a user identity request of the core network entity 50.

Fig. 3 shows an exemplary flow chart of a method according to an aspect of the invention. All elements shown in Fig. 3 and described with reference to Fig. 3 are identical to corresponding elements of Fig. 2 if same reference signs are used unless it is otherwise stated. For these same elements, a further explanation is omitted.

According to the embodiment of Fig. 3, the method starts with the terminal device 10 sending a network attach request 1 to the core network entity 50. The network attach request 1 is based on the international mobile subscriber identifier ID. In some embodiments, the network attach request may comprise the international mobile subscriber identifier ID in a plain or a concealed format.

Next, the core network entity is provided an authentication vector (not shown). The authentication vector, also called quintet, comprises the random challenge RAND, the sequence number SQN, the cipher key CK, the integrity key IK and the authentication token AUTN. Every new instance of the mutual authentication protocol requires a new authentication vector.

The random challenge RAND may have a length of 128 bits. Sequence numbers SQN may have a length of 48 bits. The cipher key CK may have a length of 128 bits. The integrity key IK may have a length of 128 bits.

The authentication token may be constructed from a concatenation of the sequence number SQN, preferably concealed using the anonymity key AK, the authentication management field AMF, and the message authentication code MAC.

The authentication management field AMF may have a length of 16 bits. The message authentication codes MAC in AUTN and MAC-S in AUTS may have a length of 64 bits. The anonymity key AK may have a length of 48 bits.

According to one preferred aspect, the authentication management field AMF may store an indicator whether or not data DAT is transmitted in the response command. For instance, a value of AMF equal to 21 may correspond to sending data DAT whereas a value of AMF equal to 99 may correspond to authenticating without sending data DAT.

The method continues by sending an authentication request 2 by the core network entity 50 to the terminal device 10. The authentication request 2 comprises the parameters RAND and AUTN of the authentication vector.

Next, the terminal device 10, upon receiving the authentication request 2, executes the AUTHENTICATE command 3. Therein, the terminal device 10, in particular its control unit in combination with the secure element 30, first generates the AK, preferably using a cryptographic key generating function based on the individual key K. Subsequently, the terminal device 10 may compute the XMAC and compare the latter to the MAC comprised in the AUTN. Using the AK, the terminal device 10 may extracts the SQN from the AUTN and verify the SQN. According to the key aspect of the invention, however, the terminal device is adapted to always simulate/pretend a synchronization failure and therefore computes the AUTS.

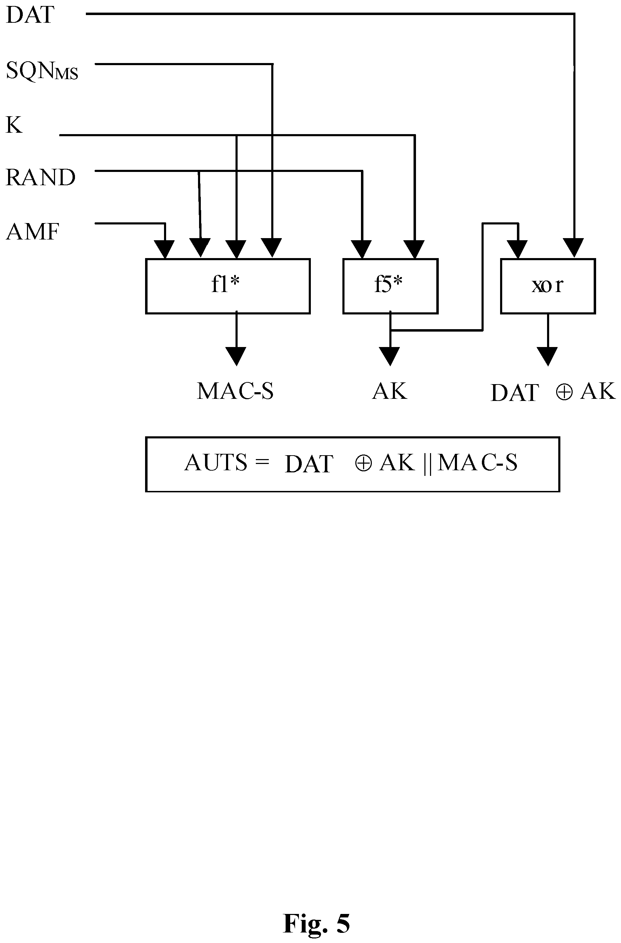

According to an aspect of the invention, the AUTS may be adapted in that it comprises data DAT of a sensor unit 20 to be transferred to a backend system 60. The construction of the AUTS is discussed in more detail with respect to Fig. 5.

Next, the method continues by the terminal device 10 sending the response command 4 comprising the AUTS in response to the authentication request 2 to the core network entity 50.

The method continues by the core network entity 50 extracting 6 the data DAT from the AUTS. Furthermore, the method comprises sending, by the core network entity 50, the extracted data DAT enriched by the international mobile subscriber identifier ID to the backend system 60, which may be an application server.

Fig. 4 shows an exemplary flow chart of a method according to a further aspect of the invention. All elements shown in Fig. 4 and described with reference to Fig. 4 are identical to corresponding elements of Fig. 3 if same reference signs are used unless it is otherwise stated. For these same elements, a further explanation is omitted.

With respect to the embodiment of Fig. 3, the exemplary embodiment of the method according to Fig. 4 further comprises a method step, according to which verifying, by the core network entity 50, the MAC-S which may be comprised in the AUTS.

Furthermore, the method comprises updating 8, by the backend system 60, a record of the data structure stored in a memory unit of the backend system 60, wherein the record is assigned to the international mobile subscriber identifier ID received from the core network entity 50. The method further comprises sending, by the backend system 60, a done message 9 to the core network entity 50 upon updating the record in the data structure.

Fig. 5 shows an exemplary embodiment of constructing the parameter AUTS by the terminal device according to an aspect of the invention.

The parameter AUTS may be constructed based on a concatenation of the data to be transferred concealed by the AK and the MAC-S.

The MAC-S may be constructed based on a cryptographic function f1* which is a message authentication function for support to resynchronization. The input values to this function f1* are the AMF, the RAND, the individual key K and the highest sequence number the terminal device ever encountered SQNMS.

The data DAT may be concealed based on a bitwise Xor operation with the AK, wherein the AK may be generated by applying a modified key generating function f5* based on the individual key K and the random challenge RAND. The bitwise Xor operation is also illustrated by the operator symbol comprising a plus in a circle. The core network entity 50 may extract the data DAT by a further bitwise Xor operation between the concealed data and the AK.

In some embodiments, the data DAT may have a length of 48 bits, such as the length of the SQN and the AK. As a result, the SQNMS which is usually comprised in the AUTS may be seamlessly replaced by the data DAT to be transferred, i.e., without needing to adapt the authentication protocol.

### REFERENCE SIGNS

- 1: Sending connection request based on international mobile subscriber identifier
- 2: Sending authentication request comprising RAND and AUTN
- 3: Executing AUTHENTICATE command
- 4: Sending response command comprising AUTS
- 5: Verifying MAC-S
- 6: Extracting data from AUTS
- 7: Sending data enriched by international mobile subscriber identifier
- 8: Updating data record based on international mobile subscriber identifier
- 9: Sending done command
- 10: Terminal device
- 20: Sensor unit
- 30: Secure element
- 40: Mobile communication interface, modem
- 50: Entity of the mobile communication network, mobile network operator
- 60: Backend system

- ID: International mobile subscriber identity
- K: Individual key of the secure element

- RAND: Network challenge
- AUTN: Authentication token

- AUTS: Synchronization failure parameter
- DC: Synchronization failure tag
- AK: Anonymity key
- f1: Message authentication function for network authentication
- f1*: Message authentication function for support to resynchronization
- f5*: Key generating function to compute AK in resynchronization procedures
- MAC: Message authentication code
- XMAC: Expected message authentication code
- AMF: Authentication management field
- DAT: Data to be transferred, IoT data
- MAC-S: Message authentication code of the AUTS
- SQN: Sequence Number
- SQNMS: Highest sequence number the terminal device ever encountered

## Claims

1. A terminal device (10) being adapted to transfer data to a backend system (60) over a mobile communication network, the terminal device (10) comprising:
- a secure element (30), wherein the secure element (30) comprises an international mobile subscriber identifier (ID)which uniquely identifies a subscriber within the mobile communication network;
- a communication interface (40) which is adapted to communicate via the mobile communication network;
wherein the terminal device (10) is adapted to:
- receive data from a sensor unit (20);
- receive an authentication request from a core network entity (50), preferably of the mobile communication network, the authentication request comprising a network challenge - RAND - and a network authentication token - AUTN;
- retrieve a sequence number - SQN - from the authentication request;
- verify the SQN;
- always declare the SQN to be invalid by returning a command response comprising a synchronization failure parameter - AUTS, the AUTS including at least one data field containing the data; and
- send the command response to the backend system (60) via the communication interface (40).

2. The terminal device (10) according to claim 1, further comprising the sensor unit (20), or wherein the terminal device (10) is coupled to the sensor unit (20) being external to the terminal device (10).

3. The terminal device (10) according to any of the preceding claims, wherein the terminal device (10) is further adapted to request via the mobile communication interface (40), a connection to the mobile communication network based on the international mobile subscriber identifier (ID).

4. The terminal device (10) according to any of the preceding claims, wherein the RAND comprises a random number which is received or generated by the core network entity (50), and the AUTN includes the SQN, preferably comprised in a parameter value computed by a bitwise Xor between the SQN and an anonymity key - AK, an authentication management field - AMF, and a message authentication code - MAC.

5. The terminal device (10) according to claim 4, wherein the terminal device (10) is further adapted to retrieve the SQN by generating the AK based on the RAND and computing a bitwise Xor between the parameter value and the AK.

6. The terminal device (10) according to any of the preceding claims, wherein the command response comprises a synchronization failure tag (DC), which is stored in a first data field of the command response, preferably the first byte, a length of the AUTS, which is stored in a second data field of the command response, preferably the second byte, and the AUTS, which is stored in a third data field of the command response, preferably the remaining bytes.

7. The terminal device (10) according to the preceding claim, wherein the third data field storing the AUTS has a maximum size, preferably 14 bytes, wherein the terminal device is further adapted to split data to be transferred which exceeds the maximum size into at least two parts, and to transfer each part of the data in sequential command responses.

8. The terminal device (10) according to any of the preceding claims, wherein the data comprises one type of the group consisting of:
- sensor data, which is captured by a sensor of the sensor unit (20);
- status data, which represents status information of the sensor unit (20) and/or the terminal device (10);
- a notification message; and
- combinations thereof.

9. The terminal device (10) according to any of the preceding claims, wherein the secure element (30) further comprises an individual key (K), which is assigned to the terminal device (10) and derived from a master key, wherein the master key is assigned to the mobile communication network, wherein the terminal device (10) is further adapted to
- derive a session key based on the individual key (K) and the received RAND;
- create a ciphertext by encrypting at least the data to be transferred based on the session key; and
- store the ciphertext in the AUTS.

10. The terminal device (10) according to any of the proceeding claims, wherein the secure element (30) is any of the group consisting of:
- a subscriber identity module, SIM,
- an embedded SIM,
- an integrated SIM,
- a software application,
- and combinations thereof.

11. A system for transferring data from a sensor unit (20) to a backend system (60) over a mobile communication network, the system comprising:
- a terminal device (10) according to any of the preceding claims,
- a core network entity (50), and
- the backend system (60), wherein the core network entity (50) is adapted to:
- send the authentication request to the terminal device (10);
- receive the command response;
- extract the data from the AUTS;
- enrich the data at least based on the international mobile subscriber identifier (ID); and
- send the enriched data to the backend system (60),
wherein the backend system (60) is adapted to store the received data in a record of a data structure in a memory unit.

12. The system of claim 11, wherein the core network entity (50) is further adapted to:
- receive a connection request of the terminal device (10) based on the international mobile subscriber identifier (ID); and
- extract and store the international mobile subscriber identifier (ID) in a database.

13. The system according to any of the claims 11 or 12, comprising the terminal device (10) according to claim 9, wherein the core network entity (50) is further adapted to:
- extract the ciphertext,
- derive the individual key (K) based on the international mobile subscriber identifier (ID) and the master key from which the individual key (K) is derived,
- derive the session key from the derived individual key (K) and the RAND, and
- decrypt the ciphertext based on the derived session key and extract the data.

14. A method for securely transferring data from a terminal device (10) to a backend system (60) over a mobile communication network,
wherein the terminal device (10) is equipped with an international mobile subscriber identifier (ID), to uniquely identify the terminal device to the mobile communication network,
wherein the method comprises the steps:
- providing, by a sensor unit (20) being assigned to the terminal device (10), data to be transferred to the secure element (30);
- requesting (1), by the terminal device (10) via the mobile communication interface (40), a connection to the mobile communication network based on the international mobile subscriber identifier (ID);
- in response to the connection request, sending, by a core network entity (50), an authentication request to the terminal device (10) via the mobile communication network, wherein the authentication request comprises a network challenge - RAND - and a network authentication token - AUTN;
- retrieving, by the terminal device (10), a sequence number - SQN - from the authentication request and verifying the SQN,
- always declaring, by the terminal device (10), the SQN to be invalid by returning a command response comprising a synchronization failure parameter - AUTS, the AUTS including at least one data field containing the data to be transferred;
- sending, by the terminal device (10), the command response to the core network entity (50) via the communication interface;
- receiving, by the core network entity (50), the command response,
- extracting, by the core network entity (50), the data from the AUTS, enriching the data at least based on the international mobile subscriber identifier (ID) and forwarding the enriched data to the backend system (60); and
- storing, by the backend system (60), the received data in a memory unit.

15. The method according to claim 14, wherein the method further comprises the steps:
- deriving, by the terminal device (10), a session key based on an individual key (K) of the secure element (30) and the received RAND, wherein the individual key is assigned to the terminal device (10) and derived from a master key, wherein the master key is assigned to the mobile communication network;
- creating, by the terminal device (10), a ciphertext by encrypting at least the data to be transferred based on the session key;
- storing, by the terminal device (10), the ciphertext in the AUTS;
- extracting, by the core network entity (50), the ciphertext,
- deriving, by the core network entity (50), the individual key (K) based on the international mobile subscriber identifier (ID) and the master key from which the individual key (K) is derived,
- deriving, by the core network entity (50), the session key from the derived individual key and the RAND, and
- decrypting, by the core network entity (50), the ciphertext based on the derived session key and extracting the data.

## Amended claims

### Amended claims in accordance with Rule 137(2) EPC.

1. A terminal device (10) being adapted to transfer data to a backend system (60) over a mobile communication network, the terminal device (10) comprising:
- a secure element (30), wherein the secure element (30) comprises an international mobile subscriber identifier - ID -which uniquely identifies a subscriber within the mobile communication network;
- a communication interface (40) which is adapted to communicate via the mobile communication network;
wherein the terminal device (10) is adapted to:
- receive data from a sensor unit (20);
- receive an authentication request from a core network entity (50), preferably of the mobile communication network, the authentication request comprising a network challenge - RAND - and a network authentication token - AUTN;
- retrieve a sequence number - SQN - from the authentication request;
- verify the SQN;
- always declare the SQN to be invalid by returning a command response comprising a synchronization failure parameter - AUTS, the AUTS including at least one data field containing the data, wherein the AUTS has a maximum size, preferably 14 bytes; send the command response to the backend system (60) via the communication interface (40);
- split the data to be transferred which exceeds the maximum size into at least two parts; and
- transfer each part of the data in sequential command responses.

2. The terminal device (10) according to claim 1, further comprising the sensor unit (20), or wherein the terminal device (10) is coupled to the sensor unit (20) being external to the terminal device (10).

3. The terminal device (10) according to any of the preceding claims, wherein the terminal device (10) is further adapted to request via the mobile communication interface (40), a connection to the mobile communication network based on the international mobile subscriber identifier, ID.

4. The terminal device (10) according to any of the preceding claims, wherein the RAND comprises a random number which is received or generated by the core network entity (50), and the AUTN includes the SQN, preferably comprised in a parameter value computed by a bitwise Xor between the SQN and an anonymity key - AK, an authentication management field - AMF, and a message authentication code - MAC.

5. The terminal device (10) according to claim 4, wherein the terminal device (10) is further adapted to retrieve the SQN by generating the AK based on the RAND and computing a bitwise Xor between the parameter value and the AK.

6. The terminal device (10) according to any of the preceding claims, wherein the command response comprises a synchronization failure tag, DC, which is stored in a first data field of the command response, preferably the first byte, a length of the AUTS, which is stored in a second data field of the command response, preferably the second byte, and the AUTS, which is stored in a third data field of the command response, preferably the remaining bytes.

7. The terminal device (10) according to the preceding claim, wherein the third data field storing the AUTS has a maximum size, preferably 14 bytes, wherein the terminal device is further adapted to split data to be transferred which exceeds the maximum size into at least two parts, and to transfer each part of the data in sequential command responses.

8. The terminal device (10) according to any of the preceding claims, wherein the data comprises one type of the group consisting of:
- sensor data, which is captured by a sensor of the sensor unit (20);
- status data, which represents status information of the sensor unit (20) and/or the terminal device (10);
- a notification message; and
- combinations thereof.

9. The terminal device (10) according to any of the preceding claims, wherein the secure element (30) further comprises an individual key, K, which is assigned to the terminal device (10) and derived from a master key, wherein the master key is assigned to the mobile communication network, wherein the terminal device (10) is further adapted to
- derive a session key based on the individual key - K - and the received RAND;
- create a ciphertext by encrypting at least the data to be transferred based on the session key; and
- store the ciphertext in the AUTS.

10. The terminal device (10) according to any of the proceeding claims, wherein the secure element (30) is any of the group consisting of:
- a subscriber identity module, SIM,
- an embedded SIM,
- an integrated SIM,
- a software application,
- and combinations thereof.

11. A system for transferring data from a sensor unit (20) to a backend system (60) over a mobile communication network, the system comprising:
- a terminal device (10) according to any of the preceding claims,
- a core network entity (50), and
- the backend system (60), wherein the core network entity (50) is adapted to:
- send the authentication request to the terminal device (10);
- receive the command response;
- extract the data from the AUTS;
- enrich the data at least based on the international mobile subscriber identifier, ID; and
- send the enriched data to the backend system (60),
wherein the backend system (60) is adapted to store the received data in a record of a data structure in a memory unit.

12. The system of claim 11, wherein the core network entity (50) is further adapted to:
- receive a connection request of the terminal device (10) based on the international mobile subscriber identifier, ID; and
- extract and store the international mobile subscriber identifier - ID - in a database.

13. The system according to any of the claims 11 or 12, comprising the terminal device (10) according to claim 9, wherein the core network entity (50) is further adapted to:
- extract the ciphertext,
- derive the individual key (K) based on the international mobile subscriber identifier - ID and the master key from which the individual key - K - is derived,
- derive the session key from the derived individual key - K - and the RAND, and
- decrypt the ciphertext based on the derived session key and extract the data.

14. A method for securely transferring data from a terminal device (10) to a backend system (60) over a mobile communication network,
wherein the terminal device (10) is equipped with an international mobile subscriber identifier, ID, to uniquely identify the terminal device to the mobile communication network,
wherein the method comprises the steps:
- providing, by a sensor unit (20) being assigned to the terminal device (10), data to be transferred to the secure element (30);
- requesting (1), by the terminal device (10) via the mobile communication interface (40), a connection to the mobile communication network based on the international mobile subscriber identifier, ID;
- in response to the connection request, sending, by a core network entity (50), an authentication request to the terminal device (10) via the mobile communication network, wherein the authentication request comprises a network challenge - RAND - and a network authentication token - AUTN;
- retrieving, by the terminal device (10), a sequence number - SQN - from the authentication request and verifying the SQN,
- always declaring, by the terminal device (10), the SQN to be invalid by returning a command response comprising a synchronization failure parameter - AUTS, the AUTS including at least one data field containing the data to be transferred;
- sending, by the terminal device (10), the command response to the core network entity (50) via the communication interface;
- receiving, by the core network entity (50), the command response,
- extracting, by the core network entity (50), the data from the AUTS, enriching the data at least based on the international mobile subscriber identifier - ID
- and forwarding the enriched data to the backend system (60); and
- storing, by the backend system (60), the received data in a memory unit.

15. The method according to claim 14, wherein the method further comprises the steps:
- deriving, by the terminal device (10), a session key based on an individual key - K - of the secure element (30) and the received RAND, wherein the individual key is assigned to the terminal device (10) and derived from a master key, wherein the master key is assigned to the mobile communication network;
- creating, by the terminal device (10), a ciphertext by encrypting at least the data to be transferred based on the session key;
- storing, by the terminal device (10), the ciphertext in the AUTS;
- extracting, by the core network entity (50), the ciphertext,
- deriving, by the core network entity (50), the individual key - K - based on the international mobile subscriber identifier - ID - and the master key from which the individual key - K - is derived,
- deriving, by the core network entity (50), the session key from the derived individual key and the RAND, and
- decrypting, by the core network entity (50), the ciphertext based on the derived session key and extracting the data.
